# EUROPEAN PATENT SPECIFICATION

(11) **EP 4 456 290 B1**
(45) Date of publication and mention of the grant of the patent: **07.10.2026**
(21) Application number: 22911049.9
(22) Date of filing: 14.12.2022
(51) Int. Cl.: D04H 1/413, D04H 1/4209, D04H 1/4218, D04H 1/58, D04H 1/732, H01M 10/658, H01M 50/204, H01M 50/229, H01M 50/231, B32B 5/02, B32B 5/26, B32B 29/02

(54) **BATTERY PROTECTION SHEET AND BATTERY PACK MODULE**
BATTERIESCHUTZFOLIE UND BATTERIEPACKMODUL
FEUILLE DE PROTECTION DE BATTERIE ET MODULE DE BLOC-BATTERIE

(30) Priority: 23.12.2021 JP 2021209897
(43) Date of publication of application: 30.10.2024
(73) Proprietor: IBIDEN CO., LTD., Ogaki-shi, Gifu 503-8604 (JP)
(72) Inventor: KOGA Yoshihiro, Ibi-gun, Gifu 501-0695 (JP)
(74) Representative: Hoffmann Eitle
(86) International application number: PCT/JP2022/046113
(87) International publication number: WO 2023/120341

(56) References cited:
- EP-A1- 3 835 262
- WO-A1-2019/187313
- JP-A- 2020 165 483
- JP-A- 2021 507 483
- JP-A- 2021 531 631
- JP-A- S58 176 186

## Description

### TECHNICAL FIELD

The present invention relates to a battery protection sheet and a battery pack module.

### BACKGROUND ART

In recent years, a secondary battery that can be charged and discharged using a nonaqueous electrolytic solution has a high energy density and high safety because of being capable of intercalating active metals into active materials, and is widely used in automobile power supplies, portable communication devices, notebook computers, or the like.

Although such a secondary battery has a high level of safety in normal use, various accidents are expected, such as a short circuit caused by a metal piece such as a nail penetrating the secondary battery from the outside. In addition, the secondary battery contains an organic electrolytic solution, and in recent years, many cells have been stacked to increase the capacity, so that the amount of the organic electrolytic solution has increased, making it extremely important to ensure the safety.

Patent Literature 1 describes a secondary battery containing an impact-resistant material such as an aramid fiber, a glass fiber, a UHMWPE fiber, and a polybenzoxazole fiber to improve the safety.

Patent Literature 2 describes a flame resistant electrical insulating material that comprises glass fibers, a particulate filler mixture, and an inorganic binder, wherein the electrical insulating material has a UL-94 flammability rating of V-0, 5VA and a thermal conductivity of less than 0.15 W/m-K. The particulate filler mixture comprises at least two particulate filler materials selected from the list of glass bubbles, kaolin clay, talc, mica, calcium carbonate, and alumina trihydrate.

### CITATION LIST

### PATENT LITERATURE

Patent Literature 1: JP2013-545235A
Patent Literature 2: JP 2021-531631 A (see also US 2021/0280336 A1)

### SUMMARY OF INVENTION

### TECHNICAL PROBLEM

The invention described above prevents damages to the secondary battery itself. However, in the case of damages and heat generation, the heat is transferred to the outside of the secondary battery that generates heat, damaging a case that covers the secondary battery, and a reaction between the organic electrolytic solution in the secondary battery and outside air further accelerates the heat generation.

In view of the above problems, an object of the present invention is to provide a battery protection sheet and a battery pack module having a high heat insulation property in addition to mechanical impact resistance.

### SOLUTION TO PROBLEM

In order to solve the above problems, (1) a battery protection sheet according to the present invention includes a papermaking sheet layer containing a first inorganic fiber, an inorganic particle, and a binding material; and a cross layer made of a second inorganic fiber, wherein the second inorganic fiber is a continuous fiber and the cross layer is obtained by knitting a weft thread and a warp thread of the second inorganic fiber into a cross shape; and wherein an interfacial region between the cross layer and the papermaking sheet layer has an intermediate layer in which the first inorganic fiber is inserted into the cross layer.

Since the battery protection sheet according to the present invention includes the papermaking sheet layer containing the first inorganic fiber and the cross layer made of the second inorganic fiber, the papermaking sheet layer has a high heat insulation property, the cross layer has mechanical impact resistance, and both the heat insulation property and the impact resistance are achieved. That is, the first inorganic fiber has a short fiber length such as a chopped fiber or a milled fiber that can be applied for papermaking, and acts to block heat transfer, and the second inorganic fiber is a continuous fiber that can form a cross, and takes advantage of a long fiber length thereof to ensure high strength.

Since the papermaking sheet layer contains an inorganic particle, the heat transfer distance of one particle is short and thermal resistance at a contact point is large, so that a high heat insulation property can be ensured. In addition, when an inorganic particle having a high refractive index such as silica nanoparticle or titania particle is used as the inorganic particle, light is easily reflected on the surface and a radiant heat shielding effect is high particularly in a high temperature region.

Since a binding material is contained, the first inorganic fiber or the inorganic particle can be prevented from falling off from the papermaking sheet layer, and the strength can be maintained.

Note that, as the binding material, an inorganic binder such as alumina sol and silica sol, and an organic binder such as a cationized starch and an acrylic resin can be selected. These binding materials are used as a raw material for the papermaking sheet in the form of an aqueous solution, and when dried, remain at the contact point of the first inorganic fiber and the inorganic particle for binding.

Since there is an intermediate layer in which the first inorganic fiber is inserted into the cross layer, high peel strength can be ensured. In addition, since the cross layer and the papermaking sheet layer are firmly bonded to each other, peeling off is difficult even when repeated vibration or compressive force is applied from the outside, and falling off can be made difficult even on a side surface or a top surface of an inner wall of the battery case. Further, the cross layer and the papermaking sheet layer are both inorganic and are directly bonded to each other without an organic matter, and can thus be used stably without peeling off even when exposed to a high temperature.
(2) The first inorganic fiber may have an average fiber length of 0.5 mm to 10 mm. If the first inorganic fiber has an average fiber length of 0.5 mm or more, after papermaking, the fibers are intertwined with each other to obtain a papermaking sheet having certain strength as a papermaking product. In addition, if the average fiber length is 10 mm or less, a heat transfer distance of one inorganic fiber is short, so that a high heat insulation property can be ensured.

(3) The papermaking sheet layer may have a thickness of 0.1 mm to 5 mm.

If the papermaking sheet layer has a thickness of 0.1 mm or more, a high heat insulation property can be imparted to the battery protection sheet. When the thickness of the papermaking sheet layer is 5 mm or less, flexibility can be ensured, and the battery protection sheet can be bent and used according to a predetermined shape. Preferably, the thickness is 0.2 mm to 1.1 mm.

(4) The cross layer may have a thickness of 0.1 mm to 5 mm.

If the cross layer has a thickness of 0.1 mm or more, high mechanical strength can be imparted to the battery protection sheet. When the thickness of the cross layer is 5 mm or less, the flexibility can be ensured, and the battery protection sheet can be bent and used according to a predetermined shape. Preferably, the thickness is 0.3 mm to 1.4 mm.

(5) A first covering layer may be further included on an outer side of the papermaking sheet layer.

When the first covering layer is on the outer side of the papermaking sheet layer, it is possible to prevent a powder from falling off from the papermaking sheet layer.

(6) The first covering layer and the papermaking sheet layer may be bonded to each other via a first bonding layer made of an adhesive or a thermoplastic resin.

When the first covering layer is fixed via a bonding layer, peeling off can be made difficult even when an external force such as friction is applied.

(7) A second covering layer may be further included on an outer side of the cross layer.

When the second covering layer is on the outer side of the cross layer, fraying can be made difficult even when a frictional force is applied from the outside to end portions of the cross layer.

(8) The second covering layer and the cross layer may be bonded to each other via a second bonding layer made of an adhesive or a thermoplastic resin.

When the second covering layer is fixed via the second bonding layer, the end portions are less likely to curl up, and the cross layer is less likely to unravel even when an external force such as friction is applied.

In addition, in order to solve the above problems, (9) a battery pack module according to the present invention includes a plurality of battery packs, a case that accommodates the battery packs, and the battery protection sheet according to any one of (1) to (8), and the sheet is attached to an inner side of the case.

Since the battery pack module according to the present invention includes the battery protection sheet having excellent mechanical impact resistance and heat resistance in the inner side of the case that accommodates the battery packs, the battery is protected against external damages caused by protrusions, and during a battery abnormality, heat transfer to the outside of the case can be suppressed, the damages to the case can be prevented, and combustible materials can be prevented from coming into contact with the outside air and burning violently, leading to excellent safety.

### ADVANTAGEOUS EFFECTS OF INVENTION

According to the present invention, since the papermaking sheet layer containing the first inorganic fiber and the cross layer made of the second inorganic fiber are included, the cross layer has mechanical impact resistance, the papermaking sheet layer has a high heat insulation property, and a battery protection sheet having both impact resistance and a heat insulation property can be provided.

In addition, according to the present invention, since the battery protection sheet having excellent mechanical impact resistance and heat resistance is included in the inner side of the case that accommodates the battery packs, the battery is protected against external damages caused by protrusions, and during a battery abnormality, heat transfer to the outside of the case can be suppressed, the damages to the case can be prevented, combustible materials can be prevented from coming into contact with the outside air and burning violently, and a battery pack module having excellent safety can be provided.

### BRIEF DESCRIPTION OF DRAWINGS

[Fig. 1] Fig. 1 shows a cross-sectional view of a battery protection sheet according to Embodiment 1 of the present invention.
[Fig. 2] Fig. 2 shows a partially enlarged view of a portion A in Fig. 1.
[Fig. 3] Fig. 3 shows a partially enlarged view of a portion B in Fig. 2.
[Fig. 4] Fig. 4 shows a cross-sectional view of a battery protection sheet according to Embodiment 2 of the present invention.
[Fig. 5] Fig. 5 shows a cross-sectional view of a battery protection sheet according to Embodiment 3 of the present invention.
[Fig. 6] Fig. 6 shows a cross-sectional view of a battery pack module using the battery protection sheet according to the present invention.
[Fig. 7] Fig. 7 is a diagram showing a shear test method for a battery protection sheet.

### DESCRIPTION OF EMBODIMENTS

Hereinafter, the present invention will be described in detail with reference to the drawings.

### <Battery Protection Sheet>

### [Embodiment 1]

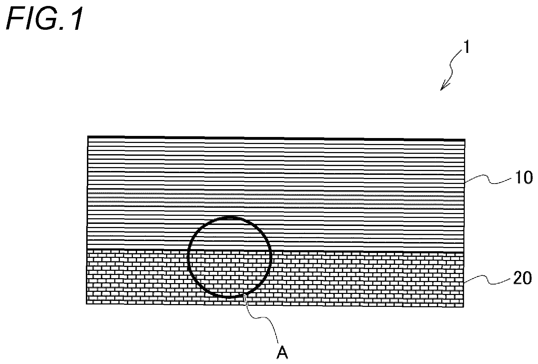

As shown in Fig. 1, a battery protection sheet 1 includes a papermaking sheet layer 10 and a cross layer 20.

### (1. papermaking Sheet Layer)

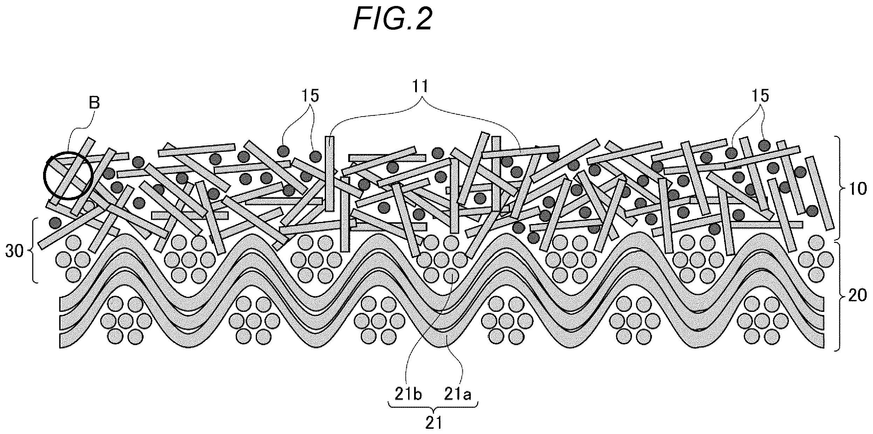

Fig. 2 is an enlarged schematic view of a portion A in Fig. 1, and the papermaking sheet layer 10 contains a first inorganic fiber 11.

### (1-1. First Inorganic Fiber)

The first inorganic fiber 11 is preferably a chopped fiber or a milled fiber for easy paper making. The first inorganic fiber 11 is preferably one having excellent heat resistance, and examples thereof include a ceramic-based fiber such as a silica fiber, an alumina fiber, an alumina silicate fiber, and a zirconia fiber, and a glass fiber. These inorganic fibers may be used alone or in combination of two or more thereof.

In the case of use in combination, it is preferable that one fiber is an amorphous fiber, and the other fiber is composed of at least one selected from an amorphous fiber having a glass transition point higher than that of the one fiber, and a crystalline fiber. In such a case, the mechanical strength is improved since when the battery protection sheet 1 is exposed to a high temperature, the surface of one inorganic fiber softens relatively quickly and binds the other inorganic fiber and the inorganic particle 15 to be described later.

The first inorganic fiber 11 preferably has an average fiber length of 0.5 mm to 10 mm. The papermaking sheet layer 10 is obtained by subjecting a suspension liquid containing the first inorganic fibers 11 to papermaking, and has an average fiber length of 0.5 mm or more. Therefore, after papermaking, as shown in Fig. 2, the first inorganic fibers contained in the papermaking sheet layer are irregularly entangled with each other, and the papermaking sheet layer has certain strength as a papermaking product. Here, "papermaking" refers to a process of dispersing short inorganic fibers in a solvent (water), adding an organic binder, an inorganic binder, a pH adjuster, or the like to the mixed liquid if necessary, pouring the mixed liquid into a molding machine with a mesh for filtration formed on the bottom, and removing the solvent in the mixed liquid (dehydration treatment). In addition, since the first inorganic fiber 11 has an average fiber length of 10 mm or less, a heat transfer distance of one inorganic fiber is short, so that a high heat insulation property can be ensured.

### (1-2. Inorganic particle)

The papermaking sheet layer 10 further contains the inorganic particle 15. Since the individual inorganic particle 15 has a short heat transfer distance and large thermal resistance at a contact point, a high heat insulation property can be ensured.

The material of the inorganic particle 15 is not particularly limited, and from the viewpoint of a heat transfer suppression effect, the inorganic particle 15 is preferably composed of at least one kind selected from an oxide particle, a carbide particle, a nitride particle, and an inorganic hydrate particle, and more preferably contains an oxide particle.

In addition, the form and the size of the inorganic particle 15 are not particularly limited either, and the inorganic particle 15 preferably includes at least one kind selected from a nanoparticle, a hollow particle, and a porous particle, and more preferably includes a nanoparticle.

Further, as the inorganic particle 15, a single kind of an inorganic particle may be used, or two or more kinds of inorganic particles may be used in combination. When two or more kinds of inorganic particles having different heat transfer suppression effects are combined, a heating element can be cooled in multiple stages and a heat absorption effect can be exhibited over a wider temperature range. It is also preferable to use a large-diameter particle and a small-diameter particle in combination. When the small-diameter particle enters gaps between the large-diameter particles, a more dense structure is formed, and the heat transfer suppression effect can be improved.

When an average secondary particle diameter of the inorganic particle 15 is 0.01 µm or more, the inorganic particle 15 is easily available and an increase in production cost can be suppressed. When the average secondary particle diameter is 200 µm or less, a desired heat insulation effect can be obtained. Therefore, the average secondary particle diameter of the inorganic particle 15 is preferably 0.01 µm or more and 200 µm or less, and more preferably 0.05 µm or more and 100 µm or less.

An example of the material or the form of particle that can be used as the inorganic particle 15 will be described in detail below.

### (1-2-1. Oxide particle)

An oxide particle has a high refractive index and has a high effect of diffusely reflecting light, so that when the oxide particle is used as the inorganic particle, radiant heat transfer can be suppressed, particularly in a high temperature range with abnormal heat generation or the like. As the oxide particle, at least one kind selected from silica, titania, zirconia, zircon, barium titanate, zinc oxide, and alumina can be used. That is, among the above oxide particle that can be used as the inorganic particle, only one kind or two or more kinds of oxide particles may be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, at least one of silica and titania is most preferably used as the oxide particle.

Since the particle diameter of the oxide particle may influence an effect of reflecting radiant heat, when an average primary particle diameter thereof is limited to a predetermined range, an even higher heat insulation property can be obtained. That is, when the average primary particle diameter of the oxide particle is 0.001 µm or more, a wavelength thereof is sufficiently larger than a wavelength of light that contributes to heating, and it diffusely reflects the light efficiently. Therefore, in a high temperature range of 500°C or higher, the radiant heat transfer of heat within the battery protection sheet 1 can be suppressed, and the heat insulation property can be further improved. On the other hand, when the average primary particle diameter of the oxide particle is 50 µm or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

In the case of using two or more kinds of oxide particles, it is also preferable to use a large-diameter particle and a small-diameter particle (nanoparticle) in combination. In this case, the average primary particle diameter of the large-diameter particle is more preferably 1 µm or more and 50 µm or less, still more preferably 5 µm or more and 30 µm or less, and most preferably 10 µm or less.

Note that in the present invention, the average primary particle diameter can be determined by observing particles with a microscope, comparing the particles with a standard scale, and taking an average of any 10 particles.

In the present invention, the nanoparticle refers to a nanometer-order particle having a spherical or nearly spherical shape and having an average primary particle diameter of less than 1 µm. The nanoparticle has a low density and thus suppresses the conductive heat transfer, and when the nanoparticle is used as the inorganic particle, voids are further finely dispersed, so that an excellent heat insulation property of suppressing the convective heat transfer can be obtained. Therefore, it is preferable to use an nanoparticle since it can suppress the conduction of heat between adjacent nanoparticles during normal use in a normal temperature range.

In the present invention, at least one kind of the oxide particle, the carbide particle, the nitride particle, and the inorganic hydrate particle selected as the inorganic particle 15 is preferably nanoparticle.

When the nanoparticle is used as the inorganic particle 15, the material thereof is not particularly limited as long as the above definition of nanoparticle is met. For example, since silica nanoparticle is a material having a high heat insulation property and have a few contact points between particles, the amount of heat conducted by the silica nanoparticle is smaller than that in a case of using silica particle having a large particle diameter. In addition, since generally available silica nanoparticle has a bulk density of about 0.1 g/cm³, even when a large compressive stress is applied to the battery protection sheet 1, the size (area) or the number of contact points between the silica nanoparticles does not increase remarkably, and the heat insulation property can be maintained. Therefore, it is preferable to use silica nanoparticle as the nanoparticle. As the silica nanoparticle, wet silica, dry silica, aerogel, or the like can be used.

In the present invention, at least one kind of the oxide particle, the carbide particle, the nitride particle, and the inorganic hydrate particle selected as the inorganic particle 15 is preferably nanoparticle. As described above, titania has a high effect of blocking the radiant heat, and silica nanoparticle has extremely low conductive heat transfer, and even when a large compressive stress is applied to the battery protection sheet 1, an excellent heat insulation property can be maintained. Therefore, most preferably, both titania and silica nanoparticle are used as the inorganic particle 15.

When the average primary particle diameter of the nanoparticle is limited to a predetermined range, an even higher heat insulation property can be obtained. That is, when the average primary particle diameter of the nanoparticle is 1 nm or more and 100 nm or less, the convective heat transfer and the conductive heat transfer of the heat within the battery protection sheet 1 can be suppressed particularly in a temperature range of lower than 500°C, and the heat insulation property can be further improved. In addition, even when a compressive stress is applied, voids remaining between the nanoparticles and contact points between many particles can suppress the conductive heat transfer, and the heat insulation property of the battery protection sheet 1 can be maintained.

Note that the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

### (1-2-2. Inorganic Hydrate particle)

The inorganic hydrate particle exhibits a so-called "heat absorption effect" that the inorganic hydrate particle receives heat from the heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2Al(OH)₃ → Al₂O₃ + 3H₂O

In a battery pack that has experienced thermal runaway, the temperature rapidly rises to higher than 200°C and continues to rise to around 700°C. Therefore, it is preferable that the inorganic particle is composed of an inorganic hydrate whose thermal decomposition start temperature is 200°C or higher. The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

In the case of using the inorganic hydrate particle, when the average particle diameter thereof is too large, it takes a certain amount of time for inorganic hydrate particle near a center of the papermaking sheet layer 10 to reach the thermal decomposition temperature thereof, so that the inorganic hydrate particle near the center of the sheet may not be completely thermally decomposed. Therefore, an average secondary particle diameter of the inorganic hydrate particle is preferably 0.01 µm or more and 200 µm or less, and more preferably 0.05 µm or more and 100 µm or less.

### (1-3. Binding Material)

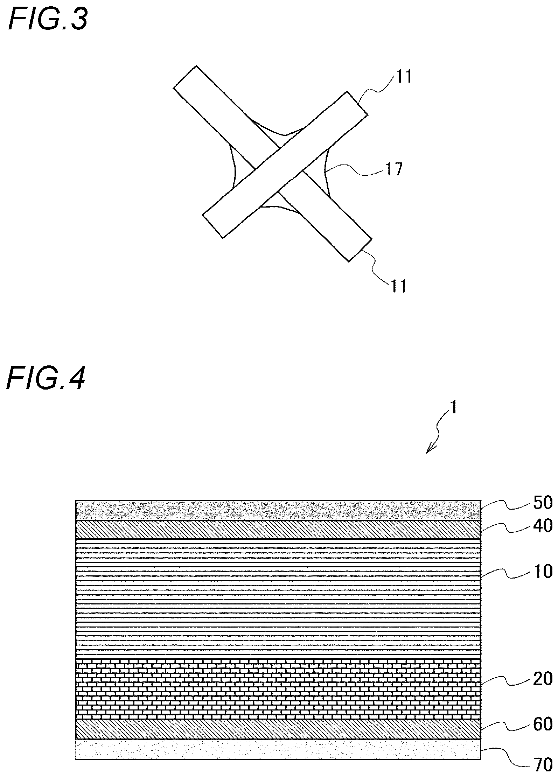

The papermaking sheet layer 10 further contains a binding material 17. Fig. 3 is a schematic view showing an enlarged view of a portion B in Fig. 2. The first inorganic fiber 11 and further the inorganic particle 15 (not shown) can be prevented from falling off from the papermaking sheet layer 10, and the strength can be maintained.

As the binding material 17, an inorganic binder such as alumina sol and silica sol, and an organic binder such as a cationized starch and an acrylic resin can be selected. These binding materials 17 are used as a raw material for the papermaking sheet layer 10 in the form of an aqueous solution, and when dried, remain at the contact point of the first inorganic fiber 11 and the inorganic particle 15 for binding.

### (1-4. Composition of papermaking Sheet Layer)

It is preferable that the inorganic particle 15 is contained in 30 mass% to 94 mass%, the binding material 17 is contained up to 10 mass%, and the balance is the first inorganic fibers 11, based on the total amount of the papermaking sheet layer 10. With such a composition, the effects of the inorganic particle 15 and the binding material 17 described above can be obtained in a well-balanced manner.

### (1-5. Thickness of papermaking Sheet Layer)

The papermaking sheet layer 10 preferably has a thickness of 0.1 mm to 5 mm. Since the papermaking sheet layer 10 has a thickness of 0.1 mm or more, a high heat insulation property can be imparted to the battery protection sheet 1. In addition, when the thickness of the papermaking sheet layer 10 is 5 mm or less, flexibility can be ensured, and the battery protection sheet 1 can be bent and used according to a predetermined shape. Preferably, the thickness is 0.2 mm to 1.1 mm.

### (2. Cross Layer)

As shown in Fig. 2, the cross layer 20 is obtained by knitting a weft thread 21a and a warp thread 21b of a second inorganic fiber 21 into a cross shape. The second inorganic fiber 21 is a continuous fiber so as to form a cross, and high strength is ensured in the battery protection sheet 1 by taking advantage of a long fiber length.

### (2-1. Second Inorganic Fiber)

Similar to the first inorganic fiber 11, examples of the second inorganic fiber 21 include a ceramic-based fiber such as a silica fiber, an alumina fiber, an alumina silicate fiber, and a zirconia fiber, and a glass fiber. These inorganic fibers may be used alone or in combination of two or more thereof.

Note that, the second inorganic fiber 21 and the first inorganic fiber 11 may be the same kind of inorganic fiber, or may be different kinds of inorganic fiber. In either case, it is a combination of inorganic matters, and the battery protection sheet 1 has excellent heat resistance.

### (2-2. Thickness of Cross Layer)

The cross layer 20 preferably has a thickness of 0.1 mm to 5 mm. Since the cross layer 20 has a thickness of 0.1 mm or more, high mechanical strength can be imparted to the battery protection sheet 1. When the thickness of the cross layer 20 is 5 mm or less, the flexibility can be ensured, and the battery protection sheet 1 can be bent and used according to a predetermined shape. Preferably, the thickness is 0.3 mm to 1.4 mm.

### (3. Intermediate Layer)

As shown in Fig. 2, it is preferable that, in an interfacial region between the papermaking sheet layer 10 and the cross layer 20, an intermediate layer 30 in which the first inorganic fibers 11 of the papermaking sheet layer 10 are inserted into stitches of the second inorganic fiber 21 of the cross layer 20 is formed.

Since the second inorganic fiber 21 is inserted into the cross layer 20, high peel strength can be ensured. In addition, since the cross layer 20 and the papermaking sheet layer 10 are firmly bonded to each other, peeling off is difficult even when the battery protection sheet 1 is subjected to repeated vibration or compressive force from the outside, and falling off is difficult even on a side surface or a top surface of an inner wall of a battery case 120 of a battery pack module 100 to be described later. Further, the cross layer 20 and the papermaking sheet layer 10 are both inorganic and are directly bonded to each other without an organic matter, and can thus be used stably without peeling off from the battery protection sheet 1 even when exposed to a high temperature.

### (4. Method for Producing Battery Protection Sheet)

A suspension liquid is prepared by adding the first inorganic fiber 11, the inorganic particle 15, and the binding material 17, which are raw materials for the papermaking sheet layer 10, to water at a predetermined ratio.

The above suspension liquid is poured onto one surface of the cross layer 20, followed by draining, dehydration, and then pressurization and vacuum drying to thereby obtain a battery protection sheet 1 in which the cross layer 20 and the papermaking sheet layer 10 are bonded to each other in a state where the first inorganic fibers 11 of the papermaking sheet layer 10 are inserted into the stitches of the second inorganic fiber 21 of the cross layer 20.

### [Embodiment 2]

As shown in Fig. 4, the battery protection sheet 1 may include a first covering layer 50 provided on an outer side of the papermaking sheet layer 10 via a first bonding layer 40, in addition to the papermaking sheet layer 10 and the cross layer 20. With the first covering layer 50, it is possible to prevent a powder (a cured product of the first inorganic fiber 11, the inorganic particle 15, or the binding material 17) from falling off from the papermaking sheet layer 10. In addition, when the first covering layer 50 is fixed with the first bonding layer 40, peeling off is difficult even when an external force such as friction is applied.

### (1. First Bonding Layer)

The first bonding layer 40 is not particularly limited as long as it can bond the first inorganic fiber 11 and the inorganic particle 15 forming the papermaking sheet layer 10 to a forming material of the first covering layer 50 to be described later. For example, various adhesives, thermoplastic resins, and double-sided tapes can be used.

### (2. First Covering Layer)

The first covering layer 50 can be made of a resin such as a polypropylene, or paper, and a film or a cross made of these can be used for the first covering layer.

Further, as shown in the figure, it is also preferable to provide a second covering layer 70 on an outer side of the cross layer 20 via a second bonding layer 60. With the second covering layer 70, fraying is difficult even when a frictional force is applied to end portions of the cross layer 20 from the outside.

Note that, the second bonding layer 60 and the second covering layer 70 can be made of a material same as the first bonding layer 40 and the first covering layer 50 to be described above.

### [Embodiment 3]

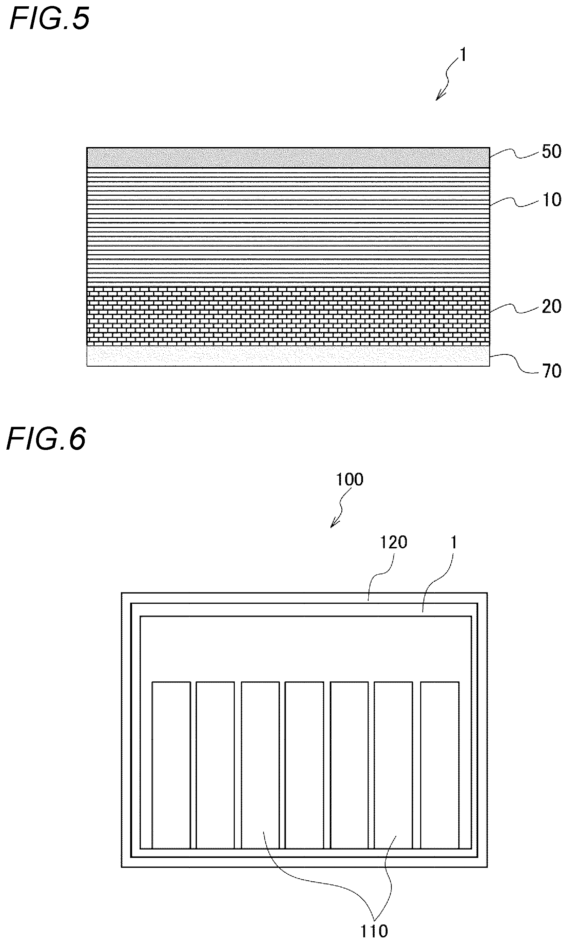

As shown in Fig. 5, the battery protection sheet 1 may include the first covering layer 50 provided on the outer side of the papermaking sheet layer 10, in addition to the papermaking sheet layer 10 and the cross layer 20. In addition, the second covering layer 70 may be provided on the outer side of the cross layer 20. The details and effects of the first covering layer 50 and the second covering layer 70 are the same as in Embodiment 2.

However, since the first covering layer 50 and the second covering layer 70 are attached directly to the surface of the papermaking sheet layer or the cross layer 20 without using a bonding layer, a part of the first covering layer 50 is melted and bonded to the papermaking sheet layer, or a part of the second covering layer 70 is melted and bonded to the cross layer 20, and a resin having a softening point can be applied to the first covering layer 50 or the second covering layer 70.

### <Battery Pack Module>

As shown in Fig. 6, the battery pack module 100 is formed by attaching the above battery protection sheet 1 on the entire inner surface (ceiling, side walls, and bottom surface) of the battery case 120 that accommodates a plurality of battery packs 110. Note that, during the attachment, either side of the papermaking sheet layer 10 or the cross layer 20 may be the case side with respect to the battery case 120.

Since the battery pack module 100 includes the battery protection sheet 1 therein, the battery pack 110 is protected against external damages caused by protrusions, and during an abnormality of the battery pack 110, heat transfer to the outside of the battery case 120 can be suppressed, the damages can be prevented, and combustible materials such as an organic electrolytic solution in the battery pack 110 can be prevented from coming into contact with the outside air and burning violently, leading to high safety.

### Examples

### (Example 1)

A glass fiber was weighed as a first inorganic fiber in an amount of 11 mass% of the total amount, silica nanoparticle and titania were weighed as the inorganic particle in an amount of 80 mass% of the total amount (Silica nanoparticle (average particle diameter: 5 nm): 56 mass%, titania (average particle diameter: 8 µm): 24 mass%), and an acrylic resin was weighed as a binding material in an amount of 5 mass% of the total amount. These materials were added to water and stirred well to prepare a suspension liquid. Then, the suspension liquid was poured onto one surface of a silica fiber cross (thickness: 1.36 mm, 4 mass% of the total amount), dehydrated, pressurized, and vacuum dried to prepare a battery protection sheet in which a papermaking sheet layer and a cross layer were laminated. Note that, the papermaking sheet layer had a thickness of 1.0 mm.

### (Example 2)

A battery protection sheet was prepared by attaching polypropylene films as a first covering layer and a second covering layer to both surfaces of the battery protection sheet in Example 1 via a double-sided tape, and applying a pressure from both surfaces.

### (Evaluation Test)

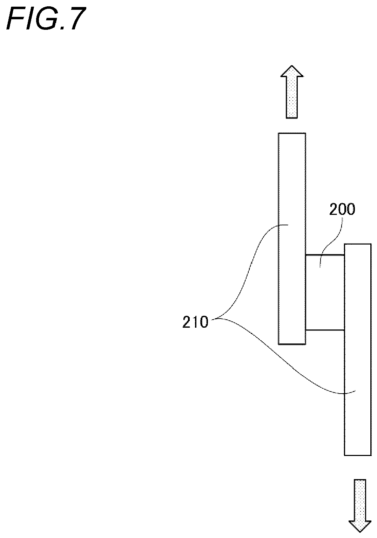

The battery protection sheet in Example 1 and the battery protection sheet in Example 2 were evaluated by a peel test. That is, as shown in Fig. 7, a battery protection sheet 200 was attached to two steel plates 210 using a double-sided tape, and pulled in an up-down direction as shown in the figure, and a shearing force at which peeling off occurred was measured.

As a result of the measurement, in the battery protection sheet in Example 1, peeling off occurred inside the papermaking sheet layer under a shearing force of 15 [N/cm²]. In contrast, in the battery protection sheet in Example 2, the double-sided tape peeled off between the steel plate 210 and the polypropylene film on the cross layer side at a shearing force of 90 [N/cm²].

As can be seen from this, in the battery protection sheets in Example 1 and Example 2, an integrated battery protection sheet in which the papermaking sheet layer and the cross layer are sufficiently bonded to each other and which has mechanical impact resistance and a high heat insulation property is obtained.

Further, it can be seen that in the battery protection sheet in Example 2, the adhesive force between the uneven papermaking sheet layer and the polypropylene film is stronger, and a strong bonding force is obtained. Then, it can be said that a stronger bonding force can be obtained by placing the papermaking sheet layer on the case side in the case of forming a battery pack module.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the scope of the present invention.

Note that the present application is based on a Japanese patent application (Japanese Patent Application No. 2021-209897) filed on December 23, 2021.

### REFERENCE SIGNS LIST

1 battery protection sheet
10 papermaking sheet layer
11 first inorganic fiber
15 inorganic particle
17 binding material
20 cross layer
21 second inorganic fiber
30 intermediate layer
40 first bonding layer
50 first covering layer
60 second bonding layer
70 second covering layer
100 battery pack module
110 battery pack
120 battery case
200 battery protection sheet
210 steel plate

## Claims

1. A battery protection sheet (1) comprising:
a papermaking sheet layer (10) containing a first inorganic fiber (11), an inorganic particle (15), and a binding material (17); and
a cross layer (20) made of a second inorganic fiber (21), wherein the second inorganic fiber (21) is a continuous fiber and the cross layer (20) is obtained by knitting a weft thread (21a) and a warp thread (21b) of the second inorganic fiber (21) into a cross shape; and
wherein an interfacial region between the cross layer (20) and the papermaking sheet layer (10) has an intermediate layer (30) in which the first inorganic fiber (11) is inserted into the cross layer (20).

2. The battery protection sheet according to claim 1, wherein the first inorganic fiber (11) has an average fiber length of 0.5 mm to 10 mm.

3. The battery protection sheet according to claims 1 or 2, wherein the papermaking sheet layer (10) has a thickness of 0.1 mm to 5 mm.

4. The battery protection sheet according to any one of claims 1 to 3, wherein the cross layer (20) has a thickness of 0.1 mm to 5 mm.

5. The battery protection sheet according to any one of claims 1 to 4, further comprising:
a first covering layer (50) on an outer side of the papermaking sheet layer (10).

6. The battery protection sheet according to claim 5, wherein the first covering layer (50) and the papermaking sheet layer (10) are bonded to each other via a first bonding layer (40) made of an adhesive or a thermoplastic resin.

7. The battery protection sheet according to any one of claims 1 to 6, further comprising:
a second covering layer (70) on an outer side of the cross layer (20).

8. The battery protection sheet according to claim 7, wherein the second covering layer (70) and the cross layer (20) are bonded to each other via a second bonding layer (60) made of an adhesive or a thermoplastic resin.

9. A battery pack module (100) comprising:
a plurality of battery packs (110);
a case (120) that accommodates the battery packs (110); and
the battery protection sheet (1) according to any one of claims 1 to 8, wherein the sheet is attached to an inner side of the case (120).

## Patentansprüche

1. Batterieschutzfolie (1), umfassend:
eine Papierherstellungsfolienschicht (10), die eine erste anorganische Faser (11), ein anorganisches Partikel (15) und ein Bindematerial (17) enthält, und
eine Kreuzschicht (20) aus einer zweiten anorganischen Faser (21), wobei die zweite anorganische Faser (21) eine Endlosfaser ist und die Kreuzschicht (20) durch Stricken eines Schussfadens (21a) und eines Kettfadens (21b) der zweiten anorganischen Faser (21) in eine Kreuzform erhalten wird, und
ein Grenzflächenbereich zwischen der Kreuzschicht (20) und der Papierherstellungsfolienschicht (10) eine Zwischenschicht (30) aufweist, in der die erste anorganische Faser (11) in die Kreuzschicht (20) eingefügt ist.

2. Batterieschutzfolie gemäß Anspruch 1, wobei die erste anorganische Faser (11) eine durchschnittliche Faserlänge von 0,5 mm bis 10 mm aufweist.

3. Batterieschutzfolie gemäß Anspruch 1 oder 2, wobei die Papierherstellungsfolienschicht (10) eine Dicke von 0,1 mm bis 5 mm aufweist.

4. Batterieschutzfolie gemäß einem der Ansprüche 1 bis 3, wobei die Kreuzschicht (20) eine Dicke von 0,1 mm bis 5 mm aufweist.

5. Batterieschutzfolie gemäß einem der Ansprüche 1 bis 4, ferner umfassend:
eine erste Deckschicht (50) auf einer Außenseite der Papierherstellungsfolienschicht (10).

6. Batterieschutzfolie gemäß Anspruch 5, wobei die erste Deckschicht (50) und die Papierherstellungsfolienschicht (10) mittels einer ersten Bindungsschicht (40) aus einem Klebestoff oder einem thermoplastischen Harz miteinander verbunden sind.

7. Batterieschutzfolie gemäß einem der Ansprüche 1 bis 6, ferner umfassend:
eine zweite Deckschicht (70) auf einer Außenseite der Kreuzschicht (20).

8. Batterieschutzfolie gemäß Anspruch 7, wobei die zweite Deckschicht (70) und die Kreuzschicht (20) mittels einer zweiten Bindungsschicht (60) aus einem Klebestoff oder einem thermoplastischen Harz miteinander verbunden sind.

9. Batteriepackmodul (100), umfassend:
eine Vielzahl von Batteriepacks (110),
ein Gehäuse (120), das die Batteriepacks (110) aufnimmt, und
die Batterieschutzfolie (1) gemäß einem der Ansprüche 1 bis 8, wobei die Folie an einer Innenseite des Gehäuses (120) angebracht ist.

## Revendications

1. Feuille (1) de protection de batterie, comprenant :
une couche en feuille (10) formée par voie papetière, contenant une première fibre inorganique (11), des particules inorganiques (15), et un matériau liant (17) ; et
une couche croisée (20), faite d'une deuxième fibre inorganique (21), dans laquelle la deuxième fibre inorganique (21) est une fibre continue et la couche croisée (20) est obtenue en tricotant un fil de trame (21a) et un fil de chaîne (21b) de la deuxième fibre inorganique (21) en une forme croisée ; et
dans laquelle une zone interfaciale entre la couche croisée (20) et la couche en feuille (10) formée par voie papetière présente une couche intermédiaire (30) dans laquelle la première fibre inorganique (11) est insérée dans la couche croisée (20).

2. Feuille de protection de batterie selon la revendication 1, dans laquelle la première fibre inorganique (11) présente une longueur moyenne de fibre allant de 0,5 mm à 10 mm.

3. Feuille de protection de batterie selon l'une des revendications 1 ou 2, dans laquelle la couche en feuille (10) formée par voie papetière présente une épaisseur allant de 0,1 mm à 5 mm.

4. Feuille de protection de batterie selon l'une quelconque des revendications 1 à 3, dans laquelle la couche croisée (20) présente une épaisseur allant de 0,1 mm à 5 mm.

5. Feuille de protection de batterie selon l'une quelconque des revendications 1 à 4, comprenant en outre :
une première couche de recouvrement (50) sur un côté extérieur de la couche en feuille (10) formée par voie papetière.

6. Feuille de protection de batterie selon la revendication 5, dans laquelle la première couche de recouvrement (50) et la couche en feuille (10) formée par voie papetière sont liées l'une à l'autre via une première couche de liaison (40) faite d'un adhésif ou d'une résine thermoplastique.

7. Feuille de protection de batterie selon l'une quelconque des revendications 1 à 6, comprenant en outre :
une deuxième couche de recouvrement (70) sur un côté extérieur de la couche croisée (20).

8. Feuille de protection de batterie selon la revendication 7, dans laquelle la deuxième couche de recouvrement (70) et la couche croisée (20) sont liées l'une à l'autre via une deuxième couche de liaison (60) faite d'un adhésif ou d'une résine thermoplastique.

9. Module (100) de bloc-batterie comprenant :
une pluralité de blocs-batteries (110) ;
un boîtier (120) qui loge les blocs-batteries (110) ; et
la feuille (1) de protection de batterie selon l'une quelconque des revendications 1 à 8, dans lequel la feuille est fixée au côté intérieur du boîtier (120).
